# EUROPEAN PATENT SPECIFICATION

(11) **EP 0 430 452 B1**
(45) Date of publication and mention of the grant of the patent: **08.05.1996**
(21) Application number: 90312049.1
(22) Date of filing: 02.11.1990
(51) Int. Cl.: H04N 1/32, H04N 1/04

(54) **Buffering control for accommodating variable data exchange rates**
Puffersteuerung zur Anpassung von variablen Datenübertragungsgeschwindigkeiten
Contrôle de tamponnage pour l'adaption de débits d'échanges de données variables

(30) Priority: 30.11.1989 US 444090
(43) Date of publication of application: 05.06.1991
(73) Proprietor: Hewlett-Packard Company, Palo Alto, California 94304 (US)
(72) Inventor: Stein, Irene Fay, Fort Collins, Colorado 80525 (US); Webb, Steven Lawrance, Loveland, Colorado 80538 (US)
(74) Representative: Colgan, Stephen James

(56) References cited:
- US-A- 4 586 088
- US-A- 4 743 975
- US-A- 4 748 514

## Description

### BACKGROUND OF THE INVENTION

### Field of the Invention

The present invention relates to devices and methods for handling digital data interchanges between assemblies which have differing data exchange rates. More particularly, the present invention relates to processes and apparatus which permit production of digital information from a source at a rate which does not match the rate of information demand from a system intended to ultimately receive the data produced by that source. While not so limited, the present invention is especially useful for allowing a scanner which converts an image into a stream of digital data to successfully communicate with a data receiving device that requests the data from the scanner at a rate differing from the rate the data is produced by the scanner.

### Description of the Prior Art

In an ideal system, digital data for transfer to a receiving device is produced at the same rate that the receiving device can accept it. Such a system does not need any buffering of data. However, many system configurations are such that the digital data is produced at its source at a rate quite different from the rate which the receiver can accept it. Data transfer to a remote processor often entails accumulation of the data so that a large block of that data is communicated to the remote processor on command. While the remote processor might have the capability of accepting data at a rate much greater than it is produced at the source, the enablement of transfer communication by the remote receiver occurs only sporadically and asynchronously to the data origination.

The problem is particularly apparent in systems employing a document scanner as the data source and a remote data processor as the ultimate receiver. While it is possible under some circumstances that the remote processor can accept data at a far greater rate than the scanner can produce it, in other situations the scanner produces data faster that the host can accept it. Rather than to waste the capabilities of the processor while the scanner is producing its data, the processor releases its interface with the scanner and only periodically inquires as to whether data is ready for transfer. Therefore buffer memories are often used to accumulate data for subsequent transfer to the remote processor on demand. Unfortunately, if the data for whatever reason is not requested before the buffer is full, it is necessary to stop generation of data from the scanner to prevent loss of the data.

Some prior art systems have attempted to resolve the problem by utilizing dual data memories so that the remote processor receives data from one memory while the scanner is loading data into the other memory. This does not prevent loss of data when the remote unit is delayed for a period long enough for the scanner to fill both buffer memories.

Another arrangement to accommodate the differing data interfacing rates is shown in U.S. Patent US-A-4,748,514 by Bell wherein the speed of the scanner motor is slowed and stopped as the data buffer approaches and reaches capacity. However it is highly undesirable to significantly vary the speed of the scanning bar of a scanner because of the distortion of the data thus collected.

US-A-4 743 975 discloses an image processing apparatus, such as a facsimile system, which has a CCD sensor for reading an original image, a detection circuit for detecting if a one-line image signal is a nearly black or white signal, a buffer memory for temporarily storing the image signal from the CCD sensor, and a microprocessor CPU for controlling the reading/recording operation in accordance with the detection result of the detection circuit. Image boundaries due to switching between reading and recording operations are eliminated from the reproduced image. A low-torque single motor may be used as a drive source in any of the transmission, reception and copying modes.

### DISCLOSURE OF THE INVENTION

Features of the invention are defined by Claims 1 and 3.

In a preferred embodiment of the invention, in order to keep the scanning mechanism moving independently of the host transfer rate, a buffer is used internally to accept the scanned data and to deliver it to the host as it is requested by the host. The whole scanning window is scanned in anticipation that the host will ask for all the data, though in portions at a time. The buffer is filled at the same time it is emptied by the host avoiding a start/ stop of the scanning mechanism after just a buffers worth of data is scanned. If the buffer does fill before the entire window is scanned, the scanning bar is backed up to a position for resuming scanning when the buffer is emptied by the host.

By anticipating the host requests, the scanned information is available at the rate the host can accept it. Allowing the host to empty the buffer at the same time it is filled by scanned data avoids stopping and restarting the scanning mechanism if the host is fast enough.

Those having normal skill in the art will recognize the foregoing and other objects, features, advantages and applications of the invention from the following more detailed description of the preferred embodiments as illustrated in the accompanying drawings.

### BRIEF DESCRIPTION OF THE DRAWINGS

FIG. 1 is a partially schematic side view of the environment of a scanner device in which this invention is useful.

FIG. 2 is a linearized presentation of the optical path of the FIG. 1 scanner.

FIG. 3 is a partially broken schematic view of the circuitry for handling and digitizing sensed analog data received from a scanner.

FIG. 4 is a block diagram of the circuit elements associated with the present invention.

FIG. 5 is a illustration of a buffer memory organization.

FIG. 6 is a representation of the scan head movement relative to a document as determined in conjunction with the present invention.

FIG. 7 is a flow chart of the system operation in accordance with the present invention.

### DETAILED DESCRIPTION OF THE PREFERRED EMBODIMENT

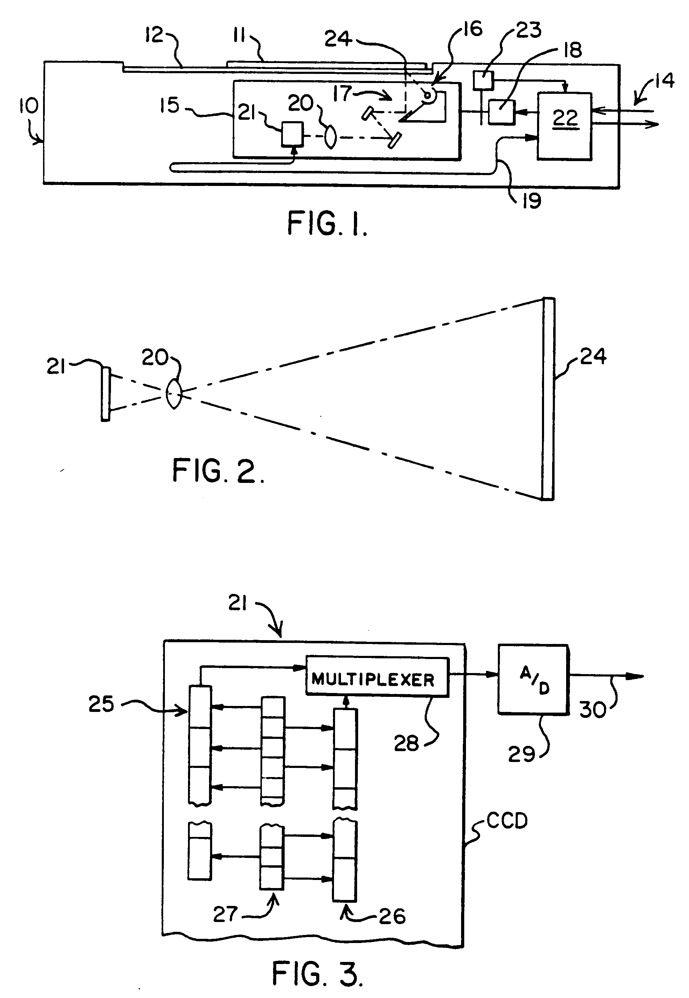

A typical document scanning machine environment for implementing the present invention is shown in FIGS. 1-3 in the form of scanner 10. While this scanner is of the general type in which the present invention finds utility, the invention is not limited to this machine.

In this exemplary scanner, document 11 is positioned with one side facing downwards on transparent platen 12. The downward facing side of document 11 is then scanned so as to convert the visual images contained thereon into an electronic image form that is useable by data processing machines and the like.

The scanning is accomplished in a FIG. 1 type device by movable carriage 15 which contains a linear light source 16 and an array 17 of reflecting mirrors. Motor 18 is mechanically coupled to carriage 15 as by gears, cables or the like, to move carriage 15 along the length of platen 12. The light reflected from platen 12 is redirected into lens 20 and thence into sensor 21.

Note that alternative scanning arrangements are available. For instance, lamp 16 could remain fixed with its light directed onto scan line 24 by yet another mirror on carriage 15. Further, a similar scanning result is possible by maintaining lamp 16 as well as mirror array 17 fixed while propelling document 11 past a fixed scanning location corresponding to line 24. Dual mirror carriages with one carriage moving at half the speed of the other to direct reflected light into a stationary sensor 21 is still another prospective alternative configuration.

Sensor 21 is preferably a charge coupled device (CCD) assembly configured as a linear serial array of discrete detector cells. Each detector cell of sensor array 21 defines a document picture element (PEL) or pixel. CCD's which can distinguish a variety of cell densities (eg: 300 cells per inch) on the document are readily available from contemporary commercial sources and can provide good quality resolution.

In FIG. 2, the typical image scan line 24 (note FIG. 1) is optically reduced in length as it passes through lens 20 in a predetermined ratio (eg: 7.5:1) before reaching the CCD detector array 21. The analog electrical signal content of sensor 21 is periodically read out, document line by document line, as carriage 15 moves along the length of document 11 on platen 12.

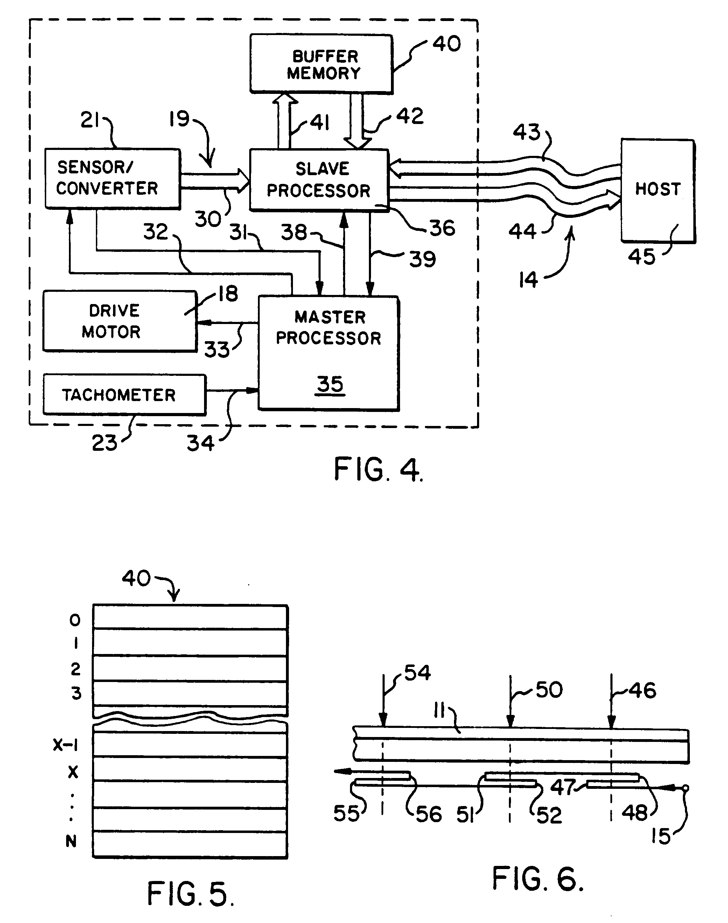

The output scan signals from sensor array 21 are coupled through flexible cable 19 to electronic controller 22 after conversion to digital form as described below in conjunction with FIG. 3. Controller 22 introduces drive signals to motor 18 and can function in an open loop manner with no feedback. However, it may also receive position or movement feedback information relative to carriage 15 such as from the output of a tachometer detector arrangement 23. Controller 22 incorporates the data processing and handling elements for exchanging data and signals with a remote processor in communication with the output cable 14 in accordance with the present invention. The operation of controller unit 22 is described in greater detail below in conjunction with FIGS. 4 et seq.

FIG. 3 illustrates one arrangement for reading out the contents of sensor 21. By means of gating signal controls (not shown) typically from controller 22, the analog signal content of every other detector cell of photocell array 27 is coupled in parallel into analog shift register 25 while the signals present in the other, intervening cells are coupled in parallel into analog shift register 26. That is, in the example shown, the contents of the odd numbered cells of array 27 are periodically transferred to shift register 25 whereas the even numbered cells have their contents transferred to shift register 26 at the same time.

The signals loaded into registers 25 and 26 are analog signals representative of various reflected light levels from individual pixels of document 11 into photocell array 27. Their electrical analog magnitude corresponds to the average of the light reflected from a small incremental area or pixel on the surface of document 11 over a predetermined period of time. Subsequent to transfer into registers 25 and 26, these signals are shifted serially through multiplexer 28 into an analog to digital converter (A/D) 29. A variety of appropriate analog to digital converters are commercially available for this purpose.

The output 30 of A/D 29 is a sequence of bytes of data, for example, one byte of data for each document 11 pixel or PEL. Each of those bytes is encoded so as to correspond digitally to the magnitude of a discrete one of the analog signals retrieved from shift registers 25 and 26, and thus each byte corresponds to the magnitude of reflected light present at one of the cells of array 27. That is, if array 27 images 300 cells or pixels per inch, output 30 of A/D 29 comprises a similar 300 bytes per inch.

The organization of the major electrical and electronic elements associated with the preferred embodiment of this invention is set forth in block diagram form in FIG. 4. The master central processing unit (CPU) 35 controls movement of the carriage 15 (note FIG. 1) by appropriate activation signals on connection 33 for motor 18 in conjunction with carriage positioning feedback from tachometer 23 detected on connection 34. In addition, master CPU 35 turns on and off the CCD sampling and analog to digital conversion of sensor/converter 21 via control signal dialog over lines 31 and 32.

The digital data result of unit 21 operation is presented in parallel on multiple line cable 30 to slave processor 36 which inserts the bytes of data into a storage location in buffer memory 40 over cable 41. Slave processor 36 receives and stores data in response to initiating commands from master CPU 35 via connection 38 and continuously informs CPU 35 of its status and operations over line 39.

Slave processor 36 is also in communication with a host data handling unit 45 via communication links 43 and 44. While parallel bit multiple line cables could provide the interface between host 45 and slave processor 36, a variety of data transmission disciplines are available for this purpose including modems, fiber optic communications, etc.

Buffer memory 40 is represented in FIG. 5 as a table with a sequence of data storage locations 0 through N. As a byte, block or group of data is received from sensor/converter unit 21 over cable 30, it is inserted in the next available location starting with location 0. As host 45 notifies slave processor 36 that it is ready to receive data, processor 36 begins transmitting blocks of data to host 45 over link 44 starting with the data contained in buffer memory 40 location 0. Loading of location N completes filling of memory 40 at which point processor 36 immediately begins again loading data into location 0 as long as it is then available. Processor 36 can concurrently handle entry of data blocks into memory 40 from sensor unit 21 and transmission of data blocks from memory 40 to host 45.

As long as host 45 requests data from processor 36 as fast as, or faster than, data is inserted into memory 40, the system proceeds smoothly until data corresponding to the entire document 11 is scanned by the scanning mechanism. The transmission of data to host 45 begins with the content of location 0 and proceeds sequentially to location N so that memory 40 is loaded and unloaded on a recycling first in, first out basis. Typically processor 36 is loading data in a downstream location of memory 40 such as at location "X" at the same time data is extracted from a prior memory location (eg: 0, 1, 2, 3, etc.) for transfer to the host 45 interface.

Processor 36 notifies CPU 35 whenever host 45 fails to request data from storage before the last available memory 40 location is loaded. By way of example, this might occur if processor 36 has loaded location N but host 45 has failed to request data contained in location 0. Or host 45 may have received data from location 0 through location X, but processor 36 has loaded through location N and wrapped around so that it has reloaded locations 0 through X-1. At this time, CPU 35 notes the location of the scanning head relative to the document and stops the drive motor. It further reverses the drive motor to return the carriage to a point ahead of the noted stop location where it remains until host 45 begins recovering data from memory 40 locations.

The movement of the scanning mechanism 15 relative to the platen 12 and document 11 under consideration in accordance with the foregoing is depicted in FIG. 6. Processor 35 actuates the drive motor so that carriage 15 is at a predetermined velocity as it reaches the leading edge of document 11. For this example, assume that memory 40 is full when carriage 15 reaches line 46 of its scanning of document 11. CPU 35 causes the drive motor to stop so that carriage 15 halts as it reaches position 47 beyond 46. CPU 35 reverses the drive motor so that carriage 15 returns to position 48 where it remains until CPU 35 determines that processor 36 can now load more data into memory 40. The distance from 48 to 46 is such that carriage 15 is again at full velocity as it reached position 46 to start producing more scan data.

The foregoing stop/start sequence repeats each time memory 40 is loaded and awaiting a data request from host 45. Two more such sequences are illustrated in FIG. 6 at 50-52 and 54-56. Eventually the complete document 11 defining data is loaded into memory 40 and transferred over interface 14 to remote host 45.

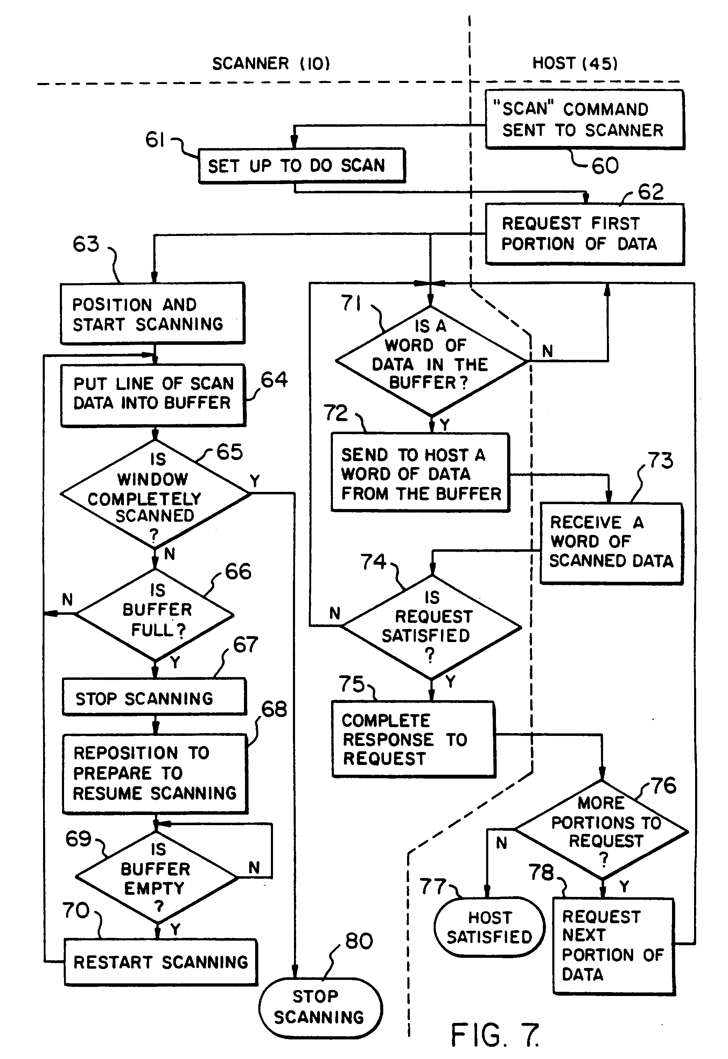

FIG. 7 is a flow chart presenting the sequence of decisions and actions associated with the operation of the elements described herein in conjunction with the preferred embodiment. That is, FIG. 7 is a flow chart of a scan as it relates to buffer control. The right half of FIG. 7 is the host 45 which demands to receive data a portion at a time. The left side shows the scanner 10 which is doing two operations simultaneously: filling buffer 40 with scanned data and emptying buffer 40 as it fulfills the host requests. Otherwise FIG. 7 is straightforward and readily understood by those having normal skill in the art.

## Claims

1. Apparatus for coordinating the exchange of digital data sets between an image scanner (10) which produces a sequence of digital data sets (19) representing a scanned image (11) at a constant rate, and a host data receiver (45) which is capable of requesting data sets (62) at a rate different from the rate that date sets are produced by said scanner (10), and wherein said scanner (10) includes means (18,33,35) responsive to input signals for locating and moving a scanning device (15) relative to said image (11), said apparatus comprising:
memory means (40) having a plurality of storage sections (O-N) arrayed in sequence from an initial said storage section (O) to a final said storage section (N),
data set storage control means (36) including means (19,41) for placing data sets from the scanner (10) into said storage sections (O-N) in said sequence from said initial storage section (O) to said final storage section (N), and in a recycling sequence beginning at said initial storage section (O) when said final data storage section (N) is full,
means (36,42,44) responsive to signals from said host data receiver (45) for transferring data sets from said memory means (40) storage sections (O-N) to said host data receiver (45), with said data set transfer occurring in said sequence from said initial storage section (O) to said final storage section (-N), and
means (36,66) responsive to the storage state of said memory means (40), including means (66) detecting that said memory means (40) is full, for introducing a stop input signal (39,35,33,67) to said scanner (10) to thereby cease producing digital data sets, and to thereby reverse movement (68) of said scanning device (15) relative to said image (11) preparatory to scanning the next digital data set producing image position (46,50,54) of said image (11),
said memory means state responsive means (36,66) further including sensing means (69) operable after introduction of said stop input signal to said scanner (10) for determining that data sets in at least one of said storage sections (O-N) was transferred to said host receiver (45) for introducing an input signal (70) to said scanner to cause said scanner (10) to resume production of digital data sets commencing with said next digital data set producing image position (46,50,54) of said image (11).

2. Apparatus in accordance with Claim 1 wherein said data storage control means (19,36,41) and said host signal responsive means (42,36,44) are concurrently operable.

3. The method for coordinating the transfer of data sets from a source (18,21) of sequential data sets that has a relatively high data set transfer rate, to a host device (45) that has a relatively lower data set transfer rate, said method utilizing a memory (409) that includes a plurality of sequential data storage locations (O-N) including an initial data storage location (O) and a last data storage location (N), said memory (40 enabling said transfer of data sets from said source (18,21) to said host device (45), and said host device (45) producing request signals for requesting transfer thereto of data sets from said data storage locations (O-N), the method comprising the steps of:
loading data from said source (18,21) into said memory (40) at said relatively high data set exchange rate and in said sequence (O-N) of data storage locations,
recycling said loading data sets step to said initial data storage location (O) if said initial data storage location (O) is available after loading said last data storage location (N),
transferring data sets from the memory (40) to said host device (45) at said relatively lower data set exchange rate concurrently with said loading data sets step, and in response to said request signals from said host device (45), with said transferring data sets step occurring in the same sequence as said loading data sets step,
detecting that all data storage locations (O-N) are full,
responding to said detecting step by causing said source (18,21) to cease productions of said data sets at a last data set,
responding to said detecting step by causing said source (18,21) to reset relative to said last data set that was transferred to said memory (40) by operation of said loading data sets step, and
restarting the data set source (18,21) in a manner to begin production of said data sets at said relatively high data set exchange rate, and at the data set that follows said last data set, when the data sets that are contained in said data storage locations (O-N) of said memory (40) are less than the number of data sets that are requested by said host device (45).

## Patentansprüche

1. Vorrichtung zum Koordinieren des Austauschs digitaler Datensätze zwischen einer Bildabtastvorrichtung (10), die eine Sequenz digitaler Datensätze (19), die ein abgetastetes Bild (11) darstellen, mit einer konstanten Rate erzeugt, und einem Host-Datenempfänger (45), der in der Lage ist, Datensätze (62) mit einer Rate anzufordern, die sich von der Rate unterscheidet, mit der die Datensätze durch die Abtastvorrichtung (10) erzeugt werden, wobei die Abtastvorrichtung (10) eine Einrichtung (18, 33, 35) aufweist, die auf Eingangssignale anspricht, um ein Abtastgerät (15) relativ zu dem Bild (11) zu positionieren und zu bewegen, wobei die Vorrichtung folgende Merkmale aufweist:
eine Speichereinrichtung (40) mit einer Mehrzahl von Speicherabschnitten (0 - N), die der Reihe nach von einem anfänglichen Speicherabschnitt (0) zu einem letzten Speicherabschnitt (N) arraymäßig angeordnet sind,
eine Datensatz-Speichersteuer-Einrichtung (36), die eine Einrichtung (19, 41) zum Plazieren von Datensätzen von der Abtastvorrichtung (10) in die Speicherabschnitte (0 - N) in der Sequenz von dem anfänglichen Speicherabschnitt (0) zu dem letzten Speicherabschnitt (N) und in einer sich wiederholenden Sequenz beginnend mit dem anfänglichen Speicherabschnitt (0), wenn der letzte Datenspeicherabschnitt (N) voll ist, aufweist,
eine Einrichtung (36, 42, 44), die auf Signale von dem Host-Datenempfänger (45) anspricht, um Datensätze von den Speicherabschnitten (0 - N) der Speichereinrichtung (40) zu dem Host-Datenempfänger (45) zu übertragen, wobei die Datensatzübertragung in der Sequenz von dem anfänglichen Speicherabschnitt (0) zu dem letzten Speicherabschnitt (N) stattfindet, und
eine Einrichtung (36, 66), die auf den Speicherzustand der Speichereinrichtung (40) anspricht, die eine Einrichtung (66) aufweist, die erfaßt, daß die Speichereinrichtung (40) voll ist, um ein Stop-Eingabesignal (39, 35, 33, 67) in die Abtastvorrichtung (10) einzugeben, um dadurch das Erzeugen digitaler Datensätze zu beenden, und um dadurch die Bewegung (68) der Abtastvorrichtung (15) relativ zu dem Bild (11) als Vorbereitung für die Abtastung der Bildposition (46, 50, 54) des Bilds (11), die den nächsten digitalen Datensatz erzeugt, umzuschalten,
wobei die Einrichtung (36, 66), die auf den Zustand der Speichereinrichtung anspricht, ferner eine Erfassungseinrichtung (69) aufweist, die nach dem Eingeben des Stop-Eingabesignals in die Abtastvorrichtung (10) wirksam ist, um zu bestimmen, daß Datensätze in zumindest einem der Speicherabschnitte (0 - N) zu dem Host-Empfänger (45) übertragen wurden, um ein Eingabesignal (70) in die Abtastvorrichtung einzugeben, um zu bewirken, daß die Abtastvorrichtung (10) die Erzeugung digitaler Datensätze beginnend mit der nächsten Bildposition (46, 50, 54) des Bilds (11), die einen digitalen Datensatz erzeugt, wieder aufnimmt.

2. Vorrichtung gemäß Anspruch 1, bei dem die Datenspeicher-Steuereinrichtung (19, 36, 41) und die auf das Host-Signal ansprechende Einrichtung (42, 36, 44) gleichzeitig wirksam sind.

3. Ein Verfahren zum Koordinieren der Übertragung von Datensätzen von einer Quelle (18, 21) sequentieller Datensätze, welche eine relativ hohe Datensatzübertragungsrate aufweist, zu einer Host-Vorrichtung (45), welche eine relativ geringe Datensatzübertragungsrate aufweist, wobei das Verfahren einen Speicher (409) verwendet, der eine Mehrzahl sequentieller Datenspeicherorte (0 - N) aufweist, welche einen anfänglichen Datenspeicherort (0) und einen letzten Datenspeicherort (N) einschließen, wobei der Speicher (40) die Übertragung von Datensätzen von der Quelle (18, 21) zu der Host-Vorrichtung (45) ermöglicht, und wobei die Host-Vorrichtung (45) Anforderungssignale zum Anfordern einer Übertragung von Datensätzen von den Datenspeicherorten (0 - N) zu derselben erzeugt, wobei das Verfahren folgende Schritte aufweist:
Laden von Daten von der Quelle (18, 21) in den Speicher (40) mit der relativ hohen Datensatz-Austauschrate und in der Sequenz (0 - N) der Datenspeicherorte,
Wiederholen des Schritts des Ladens von Datensätzen in den anfänglichen Datenspeicherort (0), wenn der anfängliche Datenspeicherort (0) nach dem Laden des letzten Datenspeicherorts (N) verfügbar ist,
Übertragen von Datensätzen von dem Speicher (40) zu der Host-Vorrichtung (45) mit der relativ geringen Datensatz-Austauschrate gleichzeitig mit dem Schritt des Ladens von Datensätzen und als Reaktion auf die Anforderungssignale von der Host-Vorrichtung (45), wobei der Schritt des Übertragens von Datensätzen in der gleichen Sequenz wie der Schritt des Ladens von Datensätzen stattfindet,
Erfassen, daß alle Datenspeicherort (0 - N) voll sind,
Ansprechen auf den Erfassungsschritt durch das Veranlassen, daß die Quelle (18, 21) die Erzeugung der Datensätze bei einem letzten Datensatz beendet,
Ansprechen auf den Erfassungsschritt durch das Bewirken, daß die Quelle (18, 21) relativ zu dem letzten Datensatz, der durch die Operation des Schritts des Ladens von Datensätzen zu dem Speicher (40) übertragen wurde, rückgesetzt wird, und
Neustarten der Datensatzquelle (18, 21) in einer Art, um die Erzeugung der Datensätze mit der relativ hohen Datensatz-Austauschrate und an dem Datensatz, der dem letzten Datensatz folgt, zu beginnen, wenn die Datensätze, die in den Datenspeicherorten (0 - N) des Speichers (40) enthalten sind, weniger als die Anzahl von Datensätzen sind, die durch die Host-Vorrichtung (45) angefordert werden.

## Revendications

1. Appareil pour coordonner l'échange d'ensemble de données numériques entre un appareil de balayage d'image (10) qui produit une séquence d'ensembles de données numériques (19) représentant une image balayée (11) à une vitesse constante, et un récepteur hôte de données (45), qui est capable de demander des ensembles de données (62) à une vitesse différente de la vitesse à laquelle les ensembles de données sont produits par ledit appareil de balayage (10), et dans lequel ledit appareil de balayage (10) comporte un moyen (18, 33, 35) sensible aux signaux d'entrée, pour localiser et déplacer un dispositif de balayage (15) par rapport à ladite image (11), ledit appareil comprenant:
un moyen de mémoire (40) comportant plusieurs parties de stockage (O-N) constituées en réseau en séquence, depuis une dite partie de stockage initiale (O) vers une dite partie de stockage finale (N),
un moyen de commande de stockage d'ensembles de données (36) comportant un moyen (19, 41) pour placer des ensembles de données provenant de l'appareil de balayage (10) dans lesdites parties de stockage (O-N) selon ladite séquence, depuis ladite partie de stockage initiale (O) vers ladite partie de stockage finale (N), et selon une séquence de reprise de cycle commençant à ladite partie de stockage initiale (O) lorsque ladite partie de stockage de données finale (N) est pleine,
un moyen (36, 42, 44) sensible aux signaux provenant dudit récepteur hôte de données (45), pour transférer des ensembles de données provenant desdites parties de stockage (O-N) dudit moyen de mémoire (40), vers ledit récepteur hôte de données (45), ledit transfert d'ensemble de données s'effectuant selon ladite séquence depuis ladite partie de stockage initiale (O) vers ladite partie de stockage finale (-N), et
un moyen (36, 66) sensible à l'état de stockage dudit moyen de mémoire (40), comportant un moyen (66) détectant que ledit moyen de mémoire (40) est plein, pour introduire un signal d'arrêt d'entrée (39, 35, 33, 67) vers ledit appareil de balayage (10), afin de cesser ainsi la production d'ensembles de données numériques, et d'inverser ainsi le mouvement (68) dudit dispositif de balayage (15) par rapport à ladite image (11), préalablement au balayage de la position d'image (46, 50, 54) de ladite image (11) produisant l'ensemble de données numériques suivant,
ledit moyen (36, 66) sensible à l'état du moyen de mémoire comportant en outre un moyen de détection (69) pouvant être actionné après introduction dudit signal d'arrêt d'entrée vers ledit appareil de balayage (10), pour déterminer que des ensembles de données dans au moins l'une desdites parties de stockage (O-N) ont été transférés vers ledit récepteur hôte (45), pour introduire un signal d'entrée (70) vers ledit appareil de balayage pour provoquer la reprise par ledit appareil de balayage (10) de la production d'ensemble de données numériques, en commençant par ladite position d'image (46, 50, 54) de ladite image (11) produisant l'ensemble de données numériques suivant.

2. Dispositif selon la revendication 1, dans lequel ledit moyen de commande de stockage de données (19, 36, 41) et ledit moyen sensible au signal hôte (42, 36, 44) peuvent être actionnés concurremment.

3. Procédé pour coordonner le transfert d'ensembles de données entre une source (18, 21) d'ensemble de données séquentielles ayant une vitesse de transfert d'ensembles de données relativement élevée, et un dispositif hôte (45), qui a une vitesse de transfert d'ensembles de données relativement basse, ledit procédé utilisant une mémoire (409) qui comporte plusieurs emplacements de stockage de données séquentiels (O-N), comportant un emplacement de stockage de données initial (O) et un dernier emplacement de stockage de données (N), ladite mémoire (40) permettant ledit transfert d'ensembles de données depuis ladite source (18, 21) vers ledit dispositif hôte (45), et ledit dispositif hôte (45) produisant des signaux de requête, pour demander un transfert vers celui-ci d'ensembles de données provenant desdits emplacements de stockage de données (O-N), le procédé comprenant les étapes de:
chargement des données provenant de ladite source (18, 21) dans ladite mémoire (40), à ladite vitesse d'échange d'ensembles de données relativement élevée, et selon ladite séquence (O-N) d'emplacements de stockage de données,
reprise du cycle de ladite étape de chargement d'ensembles de données vers ledit emplacement de stockage de données initial (O), si ledit emplacement de stockage de données initial (O) est disponible après chargement dudit dernier emplacement de stockage de données (N),
transfert des ensembles de données provenant de la mémoire (40) vers ledit dispositif hôte (45), à ladite vitesse d'échange d'ensembles de données relativement plus faible, concurremment avec ladite étape de chargement d'ensembles de données, et en réponse auxdits signaux de requête provenant dudit dispositif hôte (45), ladite étape de transfert d'ensembles de données s'effectuant selon la même séquence que ladite étape de chargement d'ensembles de données,
détection du fait que tous les emplacements de stockage de données (O-N) sont pleins,
réponse à ladite étape de détection, en faisant cesser par ladite source (18, 21) les productions desdits ensembles de données pour un dernier ensemble de données,
réponse à ladite étape de détection, en faisant réinitialiser ladite source (18, 21) par rapport audit dernier ensemble de données transféré vers ladite mémoire (40), par l'exécution de ladite étape de chargement d'ensembles de données, et
redémarrage de la source d'ensembles de données (18, 21) de façon à commencer la production desdits ensembles de données à ladite vitesse d'échange d'ensembles de données relativement élevée, et pour l'ensemble de données qui suit ledit dernier ensemble de données, lorsque les ensembles de données qui sont contenus dans lesdits emplacements de stockage de données (O-N) de ladite mémoire (40) sont en nombre inférieurs au nombre d'ensembles de données qui sont demandés par ledit dispositif hôte (45).
